Europäisches Patentamt

European Patent Office

Office européen des brevets

(19)

(11) **EP 1 436 714 B1**

(12) **FASCICULE DE BREVET EUROPEEN**

(45) Date de publication et mention
de la délivrance du brevet:
**19.01.2005 Bulletin 2005/03**

(21) Numéro de dépôt: **02801365.4**

(22) Date de dépôt: **11.10.2002**

(51) Int Cl.⁷: **G06F 13/38**

(86) Numéro de dépôt international:
**PCT/FR2002/003480**

(87) Numéro de publication internationale:
**WO 2003/034248 (24.04.2003 Gazette 2003/17)**

(54) **RECEPTEUR ASYNCHRONE DE TYPE UART A DEUX MODES DE FONCTIONNEMENT**

**ASYNCHRONER EMPFÄNGER DES UART-TYPS MIT ZWEI BETRIEBSARTEN**

**UART-TYPE ASYNCHRONOUS RECEIVER WITH TWO OPERATING MODES**

(84) Etats contractants désignés:
**DE FR GB IT**

(30) Priorité: **15.10.2001 FR 0113270**

(43) Date de publication de la demande:
**14.07.2004 Bulletin 2004/29**

(73) Titulaire: **STMicroelectronics
92120 Montrouge (FR)**

(72) Inventeurs:
• **RUAT, Ludovic
F-13119 Savourin (FR)**
• **KINOWSKI, Paul
F-13100 Aix-en-Provence (FR)**
• **CZAJOR, Alexander
F-13320 Bouc Bel Air (FR)**

(74) Mandataire: **Marchand, André
OMNIPAT,
24 Place des Martyrs de la Résistance
13100 Aix-en-Provence (FR)**

(56) Documents cités:
**US-A- 5 537 100**          **US-A- 6 163 586**

## Description

La présente invention concerne le domaine des dispositifs de transmission de données asynchrones généralement appelés des "UARTs" (Universal Asynchronous Receiver Transceiver).

La présente invention concerne plus particulièrement un récepteur de trames asynchrones débutant par un caractère d'arrêt suivi d'une pluralité de caractères standards.

Les données asynchrones sont généralement transmises au moyen de trame asynchrones comprenant un ou plusieurs caractères standards. De tels caractères standards comprennent généralement 10 bits parmi lesquels se trouvent 8 bits de données précédés d'un bit de "start" (bit de démarrage) et suivis d'un bit de stop. A l'inverse des transmissions de données synchrones, le récepteur ne reçoit pas le signal d'horloge de l'émetteur, de sorte que les horloges respectives de l'émetteur et du récepteur doivent présenter l'une relativement à l'autre une déviation n'excédant pas une certaine valeur, pour que les données puissent être transmises correctement.

Afin d'augmenter les possibilités de transfert de données asynchrones entre dispositifs présentant des circuits d'horloge peu précis et susceptibles de présenter de fortes dérives les uns relativement aux autres, on a récemment développé des protocoles de transmission de données permettant à un récepteur de caler son signal d'horloge sur celui d'un émetteur grâce à l'envoi par ce dernier d'un caractère de synchronisation. De tels protocoles sont par conséquent moins exigeants en ce qui concerne la déviation du signal d'horloge du récepteur relativement à celui de l'émetteur. Dans ce qui suit, on désignera par "signal d'horloge local" le signal d'horloge du récepteur et "signal d'horloge de référence" le signal d'horloge transmis au moyen d'un caractère de synchronisation.

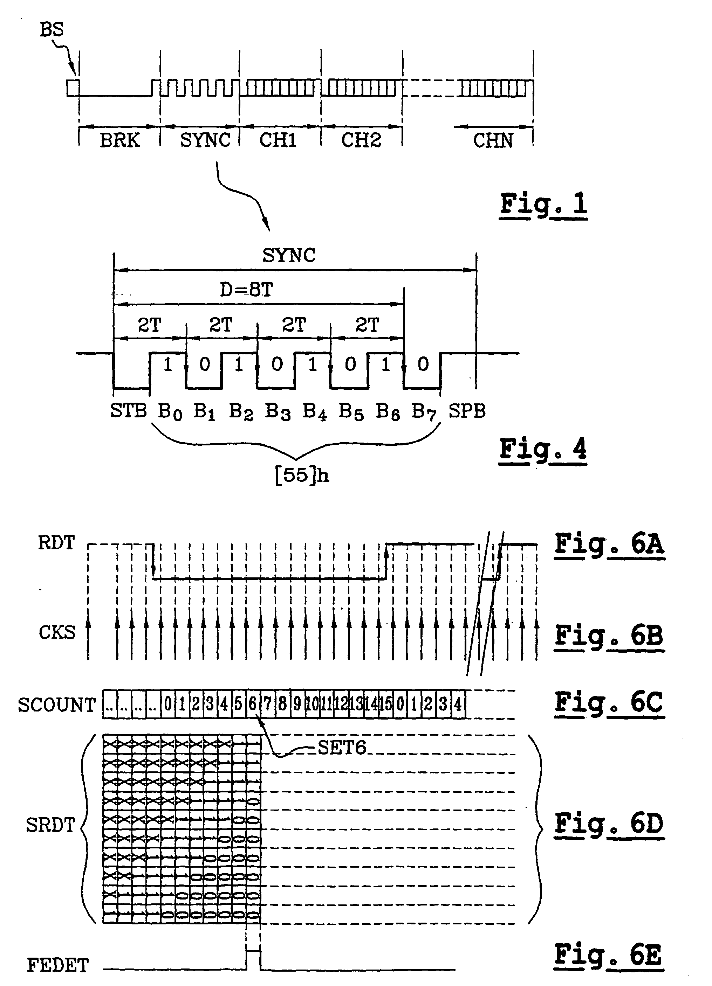

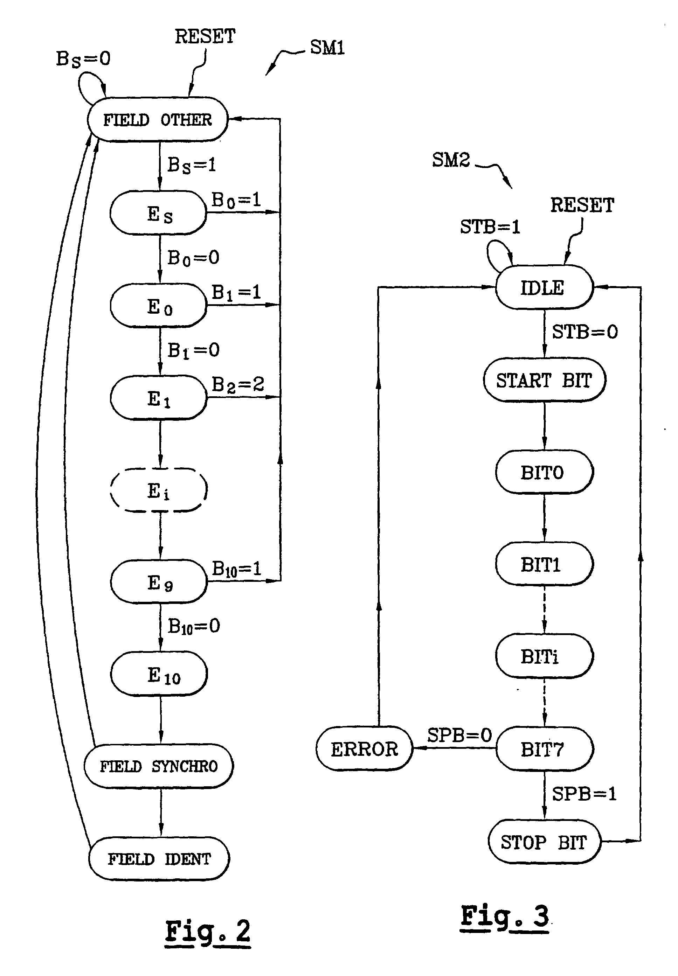

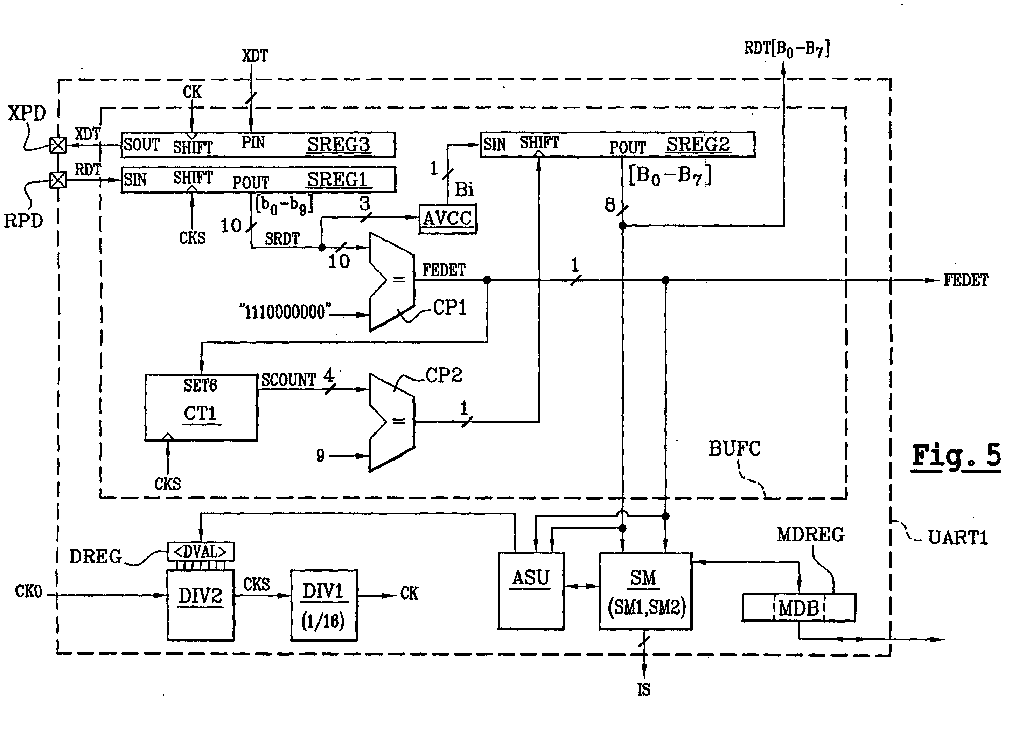

A titre d'exemple, la figure 1 représente une trame asynchrone selon le protocole LIN ("Local Interconnect Network"). La trame LIN débute par un caractère d'arrêt BRK comprenant une suite de bits à 0 et se terminant par un dernier bit égal à 1 ("extra bit"). Cette suite de bits à 0 est d'une longueur minimale de 13 bits et le caractère BRK est réputé reçu lorsque 11 bits à zéro sont détectés, ce qui permet de tolérer une déviation de l'ordre dé 15% entre le signal d'horloge local et le signal d'horloge de référence. La trame se poursuit par des caractères standards de 10 bits, comprenant un caractère de synchronisation SYNC suivi d'un ou plusieurs caractères de données CH1, CH2...CHN. Dans les liaisons multipoint entre un dispositif maître et des dispositifs esclaves, le premier caractère de données CH1 est utilisé comme champ d'identification pour la désignation du destinataire d'une trame.

Il apparaît ainsi que le récepteur doit comporter un moyen d'analyse apte à traiter des caractères de longueur variable. Il s'agit là d'une contrainte technique qui impose d'une part le traitement de caractères de 13 bits et d'autre part la prise en compte de la longueur des différents caractères. Ce traitement est réalisé par logiciel mais représente un temps de calcul non négligeable pour le calculateur chargé de l'opération, généralement le CPU (Unité Centrale de Traitement) d'un microprocesseur ou d'un microcontrôleur.

D'autre part, selon le contexte dans lequel il est utilisé, un récepteur de trames peut être amené à recevoir des trames classiques ne comportant que des caractères de données standards, par exemple dans le cas d'une liaison asynchrone conventionnelle, ou à recevoir des trames comprenant en en-tête un caractère d'arrêt, suivi éventuellement d'un caractère de synchronisation et d'un caractère d'identification, etc..

La présente invention vise ainsi un récepteur grâce auquel le traitement de trames asynchrones est considérablement simplifié, notamment un récepteur multiprotocole capable de simplifier considérablement la tâche d'une unité centrale de microprocesseur.

A cet effet, la présente invention selon la revendication indépendante 1 prévoit un récepteur de trames asynchrones prévu pour recevoir des trames comprenant des caractères standards et susceptibles de comprendre en en-tête un caractère d'arrêt d'une longueur supérieure à celle d'un caractère standard, comprenant un organe de détection de caractère d'arrêt et un organe de traitement de caractère standard, l'organe de traitement de caractère standard étant distinct de l'organe de détection de caractère d'arrêt et activé par l'organe de détection de caractère d'arrêt lorsque celui-ci est actif.

Selon un mode de réalisation, le récepteur comprend des moyens de sélection d'un premier mode de fonctionnement dans lequel l'organe de détection de caractère d'arrêt est désactivé, ou d'un second mode de fonctionnement dans lequel l'organe de détection de caractère d'arrêt est actif et contrôle l'organe de traitement de caractère standard.

Selon un mode de réalisation, l'organe de détection de caractère d'arrêt est agencé pour détecter un caractère d'arrêt composé de bits ayant tous la même valeur.

Selon un mode de réalisation, l'organe de détection de caractère d'arrêt est également agencé pour détecter un caractère de synchronisation.

Selon un mode de réalisation, le récepteur comprend un circuit d'auto synchronisation agencé pour recaler un signal d'horloge local du récepteur sur un signal d'horloge de référence présent dans un caractère de synchronisation.

Selon un mode de réalisation, le circuit d'auto synchronisation est activé par l'organe de détection de caractère d'arrêt.

Selon un mode de réalisation, l'organe de détection de caractère d'arrêt est une machine d'état.

Selon un mode de réalisation, l'organe de traitement de caractère standard est une machine d'état.

Selon un mode de réalisation, les moyens de sélection d'un premier ou d'une second mode de fonctionnement comprennent un registre dans lequel est stocké un bit de mode.

La présente invention concerne également un circuit intégré comprenant un récepteur selon l'invention.

La présente invention concerne également un microcontrôleur comprenant un récepteur selon l'invention.

La présente invention selon la revendication indépendante 12 concerne également un procédé de réception de trames asynchrones comprenant des caractères standards et susceptibles de comprendre en en-tête un caractère d'arrêt d'une longueur supérieure à celle d'un caractère standard, comprenant une étape de détection de caractère d'arrêt suivi d'une étape de traitement de caractère standard, dans lequel les étapes de détection de caractère d'arrêt et de traitement de caractère standard sont réalisées avec des moyens distincts, au moyen d'un organe de détection de caractère d'arrêt et d'un organe de traitement de caractère standard, l'organe de traitement étant activé par l'organe de détection lorsque celui-ci est actif.

Selon un mode de réalisation, l'organe de détection de caractère d'arrêt est agencé pour détecter un caractère d'arrêt composé de bits ayant tous la même valeur.

Selon un mode de réalisation, l'étape de détection de caractère d'arrêt est mise en oeuvre au moyen d'une machine d'état.

Selon un mode de réalisation, l'étape de traitement de caractère standard est mise en oeuvre au moyen d'une machine d'état.

Selon un mode de réalisation, le procédé comprend une étape d'identification d'un caractère de synchronisation reçu après le caractère d'arrêt.

Selon un mode de réalisation, le procédé comprend une étape de synchronisation d'un signal d'horloge local à partir d'un signal d'horloge de référence présent dans le caractère de synchronisation, l'étape de récupération faisant suite à l'étape d'identification.

Selon un mode de réalisation, le procédé comprend une étape de sélection d'un premier mode de fonctionnement dans lequel l'organe de détection de caractère d'arrêt est désactivé, ou d'un second mode de fonctionnement dans lequel l'organe de détection de caractère d'arrêt est actif et contrôle l'organe de traitement de caractère standard.

Ces objets, caractéristiques et avantages ainsi que d'autres de la présente invention seront exposés plus en détail dans la description suivante d'un exemple de réalisation d'un récepteur de trames asynchrones selon l'invention, faite à titre non limitatif en relation avec les figures jointes parmi lesquelles :

- la figure 1 précédemment décrite représente une trame asynchrone selon le protocole LIN,

- la figure 2 représente un organe de détection d'un caractère d'arrêt,
- la figure 3 représente un organe de traitement de caractères standards,
- la figure 4 représente un caractère de synchronisation,
- la figure 5 représente un dispositif UART1 selon l'invention,
- les figures 6A à 6E représentent des signaux électriques ou logiques apparaissant dans le circuit UART1 de la figure 5, et
- la figure 7 représente schématiquement un microcontrôleur comprenant un circuit UART1 selon l'invention.

Comme indiqué au préambule, un caractère d'arrêt BRK consiste en une suite de N bits à 0, par exemple 13 bits à 0 dans le protocole LIN auquel on se réfèrera par la suite à titre d'exemple non limitatif. Pour tenir compte d'un décalage de fréquence entre ce signal et le signal d'horloge local du récepteur, la détection de ce caractère est réalisée (selon le protocole LIN) par l'identification d'une suite de 11 bits à 0. Ce nombre de 11 bits est défini par convention afin de tolérer une déviation de $\pm 15\%$ entre le signal d'horloge local et le signal d'horloge de référence.

Un récepteur de trames asynchrones UART1 selon l'invention comporte un organe de détection du caractère d'arrêt BRK, qui prend par exemple la forme d'une première machine d'état SM1.

Un exemple de réalisation d'une telle machine d'état SM1 est représenté en figure 2. La machine d'état SM1 comprend tout d'abord un état d'attente "FIELD OTHER" qui est rendu actif après application d'un signal de remise à zéro RESET à la machine d'état. La réception d'un bit BS à 1 (bit BS précédant un caractère BRK, Cf. fig. 1) déclenche le passage de l'état FIELD OTHER à un état intermédiaire ES. La réception du bit suivant B0 selon qu'il vaut 0, respectivement 1, provoque le passage à un état intermédiaire E0 ou, respectivement, le retour à l'état IDLE. Dans l'état E0, la réception du deuxième bit B1 suivant le bit BS, selon qu'il vaut 0, respectivement 1, déclenche le passage à un état intermédiaire E1 ou, respectivement, le retour à l'état IDLE.

En généralisant, la réception du $(i + 1)^{\text{ième}}$ bit suivant le bit BS par la machine d'état se trouvant dans un état intermédiaire Ei, provoque le passage à un état Ei+1 ou le retour à l'état IDLE selon que le bit reçu vaut 0 ou 1.

Lorsque l'indice i vaut 9, la réception du onzième bit B10 suivant le bit BS, selon qu'il vaut 0 ou 1, déclenche le passage à un état E10 ou le retour à l'état d'attente.

Il sera noté ici que le caractère d'arrêt BRK peut être détecté de toute autre manière, par exemple au moyen d'un registre à décalage de 11 bits dont tous les bits font l'objet d'une opération logique ET.

Lorsque le caractère d'arrêt BRK est détecté, les caractères suivants de la trame sont tous des caractères standards composés de 10 bits. Selon l'invention, ces caractères standards sont traités au moyen d'un organe de traitement dédié, distinct de l'organe de détection des caractères BRK.

Cet organe de traitement consiste par exemple en une deuxième machine d'état SM2, comme illustré sur la figure 3. La machine d'état SM2 comprend des états IDLE (attente), START BIT (réception d'un bit de start STB à 0), BIT0 (réception d'un premier bit de donnée), BIT1 (réception d'un second bit de donnée),.... BITi (réception d'un bit de donnée de rang i),... BIT7 (réception d'un huitième bit de donnée), STOP BIT (réception d'un bit de stop SPB à 1 après réception du huitième bit de donnée), et ERROR (réception d'un bit à 0 après réception du huitième bit de donnée). L'état IDLE est activé après application d'une commande RESET à la machine d'état. L'accès à l'état START BIT nécessite la réception d'un bit à 0, sinon la machine d'état reste dans l'état IDLE. Les états BIT0, BIT1...BITi...BIT7 s'enchaînent sans condition. En cas d'erreur de réception du bit de stop après le huitième bit de données B7, la machine d'état passe dans l'état ERROR et revient à l'état IDLE.

Il apparaît donc qu'un récepteur UART1 selon l'invention comprend une première machine d'état SM1 visant à l'identification d'un caractère BRK particulier à certains protocoles, notamment le protocole LIN, et une deuxième machine d'état SM2, en soi classique, parfois désignée dans l'art antérieur "UART STANDARD STATE MACHINE".

Dans ces conditions, une idée avantageuse de la présente invention est de prévoir, dans un circuit UART1 selon l'invention, deux modes de fonctionnement. Le premier mode de fonctionnement est un mode de fonctionnement classique dans lequel seule la deuxième machine d'état SM2 est active. Le second mode de fonctionnement est un mode de fonctionnement dédié aux protocoles du type LIN, prévoyant un caractère d'arrêt BRK en début de trame. Dans le second mode de fonctionnement, les deux machines d'état sont utilisées et la première machine d'état SM1 active la seconde machine d'état SM2 après qu'un caractère BRK est détecté.

La machine d'état SM1, décrite succinctement dans ce qui précède, peut par ailleurs être améliorée pour assurer la détection complète de l'en-tête d'une trame, les caractères standards continuant d'être traités par la machine d'état SM2. Ainsi, dans un mode de réalisation dédié au protocole LIN, la machine d'état SM1 peut comprendre en sus des états décrits ci-dessus un état "FIELD SYNCHRO" et un état "FIELD IDENT". L'état "FIELD SYNCHRO" est atteint après détection d'un caractère BRK, c'est-à-dire après passage à l'état E10, et couvre la période de réception du caractère de synchronisation SYNC prévu par le protocole LIN. Lorsque la machine d'état SM1 est dans l'état "FIELD SYNCHRO", elle désactive la machine d'état SM2 car le champ reçu n'est pas considéré comme un caractère standard et certaines opérations doivent être effectuées, notamment le recalage d'une horloge locale, comme cela sera vu plus loin. Selon un aspect avantageux de l'invention, la machine d'état SM1 active en outre un circuit d'auto synchronisation de l'horloge locale lorsqu'elle se trouve dans l'état FIELD SYNCHRO.

L'état "FIELD IDENT" est atteint après réception d'un caractère SYNC valide, et correspond à la réception du premier caractère CH1 de donnée, utilisé dans le protocole LIN comme champ d'identification du destinataire de la trame. Après l'état "FIELD IDENT", la machine d'état SM1 retourne à l'état FIELD OTHER.

L'analyse du caractère de synchronisation SYNC va maintenant être détaillée.

Le caractère de synchronisation SYNC est représenté plus en détail sur la figure 4 est égal à [55]h en notation hexadécimale, soit "10101010" en binaire. Ce caractère étant précédé d'un bit de start STB à 0 et suivi d'un bit de stop SPB à 1, on dispose en tout de 5 fronts descendants pour accorder un signal d'horloge local au signal d'horloge de référence présent dans le caractère SYNC. La durée s'écoulant entre les 5 fronts descendants étant égale à 8 fois la période T du signal d'horloge de référence, la mesure de cette durée permet d'en déduire la période T de référence et d'y accorder celle du signal d'horloge local.

La figure 5 représente de façon schématique l'architecture d'un circuit UART1 selon l'invention, permettant de synchroniser un signal d'horloge local CK sur le signal d'horloge véhiculé par un caractère de synchronisation SYNC. Le signal d'horloge local CK est délivré par un diviseur DIV1, ici un diviseur par 16, recevant en entrée un signal d'échantillonnage CKS. Le signal CKS est lui-même délivré par un diviseur programmable DIV2 recevant en entrée un signal d'horloge primaire CK0. Le rapport entre la fréquence du signal CK0 et celle du signal CKS est déterminé par une valeur DVAL chargée dans un registre DREG du diviseur programmable.

Le circuit UART1 comprend également un circuit tampon BUFC et une machine d'état SM comprenant les deux machines d'état SM1, SM2 décrites plus haut, qui identifie les caractères d'arrêt BRK et de synchronisation SYNC et délivre des signaux d'information IS au milieu extérieur. Le "milieu extérieur" est par exemple une architecture de microcontrôleur (non représentée) au sein de laquelle le circuit UART1 est implanté. Les signaux IS indiquent par exemple qu'un caractère de synchronisation SYNC est en cours de réception, qu'une donnée reçue est disponible en lecture dans le circuit BUFC, etc..

Le circuit tampon BUFC comprend ici deux registres de réception SREG1, SREG2, un registre d'émission SREG3, un compteur CT1 de 4 bits (compteur par 16), deux comparateurs logiques CP1, CP2 et un circuit AVCC. Le registre SREG1 est un registre à décalage de 10 bits dont l'entrée SHIFT est cadencée par le signal CKS. Il reçoit des données RDT sur une entrée série SIN connectée à une borne de réception de données RPD, et délivre sur une sortie parallèle POUT des données SRDT échantillonnées (bits b0 à b9). Les données SRDT sont appliquées à l'entrée du circuit AVCC dont la sortie délivre un bit Bi qui est envoyé sur une entrée série SIN du registre SREG2. Chaque bit Bi délivré par le circuit AVCC est classiquement égal à la valeur majoritaire des échantillons de rangs 7, 8 et 9 (bits b7 à b9) présents dans le registre SREG1.

Les données SRDT sont également appliquées sur une entrée du comparateur CP1 dont l'autre entrée reçoit un nombre de référence "1110000000", formant un critère de détection de fronts descendants. Le comparateur CP1 délivre un signal FEDET qui est communiqué au milieu extérieur et est également appliqué sur une entrée de remise à 6 (entrée "SET 6") du compteur CT1, lequel est cadencé par le signal CKS. Le compteur CT1 délivre un signal SCOUNT de comptage d'échantillons qui est appliqué sur une entrée du comparateur CP2, dont l'autre entrée reçoit sous forme binaire un nombre de référence égal à 9 en base 10. La sortie du comparateur CP2 pilote l'entrée de décalage SHIFT du registre SREG2. Enfin, le registre SREG3 est un registre à décalage cadencé par le signal d'horloge local CK, recevant des données XDT sur une entrée parallèle PIN et délivrant des données série XDT sur une sortie SOUT connectée à une borne XPD.

La détection par le circuit UART1 des fronts descendants d'un caractère de synchronisation SYNC est illustrée sur les figures 6A à 6E, qui représentent respectivement les données RDT, le signal d'échantillonnage CKS, le signal SCOUNT, les données SRDT échantillonnées par le registre SREG1, et le signal FEDET. Le passage à 1 du signal FEDET indique qu'un front descendant est détecté et intervient lorsque les données SRDT sont égales à "1110000000". Les fronts descendants étant détectés après réception de sept échantillons égaux à 0, le compteur CT1 est recalé sur la valeur "6" (soit le septième cycle de comptage à partir de 0) lors du passage à 1 du signal FEDET.

Après réception du caractère de synchronisation SYNC, les données présentes dans les caractères CH1, CH2... sont reçues bit à bit, un bit de donnée Bi délivré par le circuit AVCC (valeur majoritaire des échantillons b7 à b9) étant chargé dans le registre SREG2 tous les 16 cycles du signal CKS, soit à chaque cycle du signal d'horloge local CK. Le chargement d'un bit Bi s'effectue au dixième cycle de comptage du compteur CT1, lorsque la sortie du comparateur CP2 passe à 1. Les données reçues RDT sont stockées dans le registre SREG2 par groupe de 8 bits B0-B7 et peuvent être lues par l'intermédiaire d'une sortie parallèle POUT de ce registre.

Le caractère de synchronisation SYNC représenté en figure 4 peut permettre à une unité de calcul externe, par exemple l'unité centrale d'un microcontrôleur, de déterminer la valeur DVAL à placer dans le diviseur DIV2 pour obtenir une faible déviation du signal d'horloge local CK. Cette valeur est telle que la période Ts du signal d'échantillonnage CKS doit être égale à :

$$Ts = D/(8*16),$$

D étant la durée mesurée entre les cinq fronts descendants du caractère de synchronisation SYNC, soit huit périodes T de l'horloge de référence.

Toutefois, dans un mode de réalisation avantageux du circuit UART1 selon l'invention, la machine d'état SM est associée à une unité d'auto synchronisation ASU à logique câblée, qui analyse le caractère SYNC et détermine la valeur DVAL à charger dans le registre DREG, de sorte qu'il n'est plus nécessaire de faire ce calcul par logiciel au moyen d'une unité centrale. L'unité ASU est activée par la machine d'état SM1 lorsque celle-ci passe dans l'état FIELD SYNCHRO, comme cela a été mentionné plus haut.

Par ailleurs, selon un aspect optionnel mais avantageux de la présente invention, le circuit UART1 comprend en outre un registre MDREG dans lequel est stocké un bit de mode MDB accessible en lecture et en écriture depuis le milieu extérieur. Lorsque le bit de mode présente une première valeur, le circuit UART1 fonctionne comme un circuit UART classique, la machine d'état SM1 étant désactivé, ainsi que par conséquent l'unité d'auto synchronisation ASU. Lorsque le bit de mode présente une seconde valeur, les deux machines d'état SM1, SM2 sont opérationnelles et le circuit UART1 peut traiter des trames complexes telles que par exemple des trames LIN.

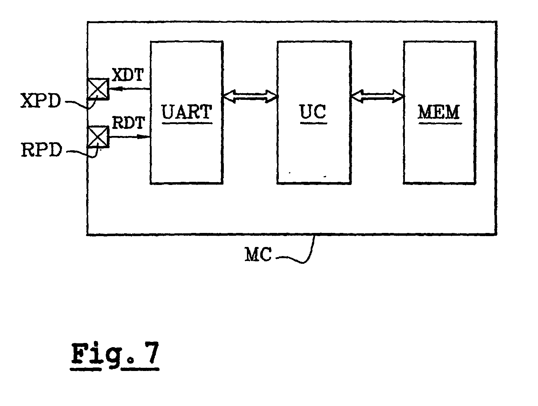

A titre d'exemple de mise en oeuvre de la présente invention, la figure 7 représente schématiquement un microcontrôleur MC comprenant sur une même puce de silicium une unité centrale UC, une mémoire programme MEM, et un circuit UART1 selon l'invention. Le circuit UART1 est connecté à des plages d'entrée/sortie RPD/XPD du circuit intégré. L'unité centrale UC utilise le circuit UART1 pour l'émission et la réception de données asynchrones XDT, RDT via les plages XPD, RPD.

Il apparaîtra clairement à l'homme de l'art que la présente invention est susceptible de diverses variantes et modes de réalisation. En particulier, toute étape ou tout moyen décrit peut-être remplacé par une étape ou un moyen équivalent sans sortir du cadre de la présente invention.

## Revendications

1. Récepteur (UART1) de trames asynchrones prévu pour recevoir des trames comprenant des caractères standards (CH1-CHN) et susceptibles de comprendre en en-tête un caractère d'arrêt (BRK) d'une longueur supérieure à celle d'un caractère standard,

**caractérisé en ce qu'**il comprend un organe (SM1) de détection de caractère d'arrêt et un organe (SM21) de traitement de caractère standard, l'organe (SM21) de traitement de caractère standard étant distinct de l'organe de détection de caractère d'arrêt et activé par l'organe de détection de caractère d'arrêt lorsque celui-ci est actif.

2. Récepteur selon la revendication 1, **caractérisé en ce qu'**il comprend des moyens de sélection (MDREG, MDB) d'un premier mode de fonctionnement dans lequel l'organe de détection de caractère d'arrêt est désactivé, ou d'un second mode de fonctionnement dans lequel l'organe de détection de caractère d'arrêt est actif et contrôle l'organe de traitement de caractère standard.

3. Récepteur selon l'une des revendications 1 et 2, **caractérisé en ce que** l'organe de détection de caractère d'arrêt est agencé pour détecter un caractère d'arrêt (BRK) composé de bits ayant tous la même valeur.

4. Récepteur selon l'une des revendications 1 à 3, **caractérisé en ce que** l'organe de détection de caractère d'arrêt est également agencé pour détecter un caractère de synchronisation (SYNC).

5. Récepteur selon la revendication 4, **caractérisé en ce qu'**il comprend un circuit d'auto synchronisation (ASU) agencé pour recaler un signal d'horloge local (CK) du récepteur sur un signal d'horloge de référence présent dans un caractère de synchronisation.

6. Récepteur selon la revendication 5, **caractérisé en ce que** le circuit d'auto synchronisation est activé par l'organe de détection de caractère d'arrêt (SM1).

7. Récepteur selon l'une des revendications 1 à 6, **caractérisé en ce que** l'organe de détection de caractère d'arrêt est une machine d'état (SM1).

8. Récepteur selon l'une des revendications 1 à 7, **caractérisé en ce que** l'organe de traitement de caractère standard est une machine d'état (SM2).

9. Récepteur selon l'une des revendications 1 à 8, dans lequel les moyens de sélection (MDREG, MDB) d'un premier ou d'une second mode de fonctionnement comprennent un registre (MDREG) dans lequel est stocké un bit de mode (MDB).

10. Circuit intégré, comprenant un récepteur selon l'une des revendications 1 à 9.

11. Microcontrôleur, comprenant un récepteur selon l'une des revendications 1 à 9.

12. Procédé de réception de trames asynchrones comprenant des caractères standards (CH1-CHN) et susceptibles de comprendre en en-tête un caractère d'arrêt (BRK) d'une longueur supérieure à celle d'un caractère standard, comprenant une étape de détection de caractère d'arrêt suivi d'une étape de traitement de caractère standard,
   **caractérisé en ce que** les étapes de détection de caractère d'arrêt et de traitement de caractère standard sont réalisées avec des moyens distincts, au moyen d'un organe (SM1) de détection de caractère d'arrêt et d'un organe (SM2) de traitement de caractère standard, l'organe de traitement étant activé par l'organe de détection lorsque celui-ci est actif.

13. Procédé selon la revendication 12, dans lequel l'organe de détection de caractère d'arrêt est agencé pour détecter un caractère d'arrêt (BRK) composé de bits ayant tous la même valeur.

14. Procédé selon l'une des revendications 12 et 13, **caractérisé en ce que** l'étape de détection de caractère d'arrêt est mise en oeuvre au moyen d'une machine d'état (SM1).

15. Procédé selon l'une des revendications 12 à 14, **caractérisé en ce que** l'étape de traitement de caractère standard est mise en oeuvre au moyen d'une machine d'état (SM2).

16. Procédé selon l'une des revendications 12 à 15 **caractérisé en ce qu'**il comprend une étape d'identification d'un caractère de synchronisation (SYNC) reçu après le caractère d'arrêt.

17. Procédé selon la revendication 16, **caractérisé en ce qu'**il comprend une étape de synchronisation d'un signal d'horloge local (CK) à partir d'un signal d'horloge de référence présent dans le caractère de synchronisation (SYNC), l'étape de récupération faisant suite à l'étape d'identification.

18. Procédé selon l'une des revendications 12 à 17, comprenant une étape de sélection (MDREG, MDB) d'un premier mode de fonctionnement dans lequel l'organe de détection de caractère d'arrêt est désactivé, ou d'un second mode de fonctionnement dans lequel l'organe de détection de caractère d'arrêt est actif et contrôle l'organe de traitement de caractère standard.

**Patentansprüche**

1. Empfänger (UART1) für asynchrone Raster, der dazu vorgesehen ist, Raster zu empfangen, die Standardzeichen (CH1-CHN) umfassen und in der Kopfzeile ein Haltezeichen (BRK) mit einer größeren Länge als jene eines Standardzeichens umfassen können,

**dadurch gekennzeichnet, dass** er ein Element (SM1) zur Erfassung eines Haltezeichens und ein Element (SM21) zur Bearbeitung eines Standardzeichens umfasst, wobei das Element (SM21) zur Bearbeitung eines Standardzeichens von dem Element zur Erfassung eines Haltezeichens getrennt ist und von dem Element zur Erfassung eines Haltzeichens aktiviert wird, wenn dieses aktiv ist.

2. Empfänger nach Anspruch 1, **dadurch gekennzeichnet, dass** er Mittel (MDREG, MDB) zur Auswahl einer ersten Betriebsart, bei der das Element zur Erfassung eines Haltezeichens deaktiviert ist, oder einer zweiten Betriebsart umfasst, bei der das Element zur Erfassung eines Haltezeichens aktiv ist und das Element zur Bearbeitung eines Standardzeichens kontrolliert.

3. Empfänger nach einem der Ansprüche 1 und 2, **dadurch gekennzeichnet, dass** das Element zur Erfassung eines Haltzechens derart angeordnet ist, dass ein Haltzeichen (BRK) erfasst wird, das sich aus Bits zusammensetzt, die alle denselben Wert haben.

4. Empfänger nach einem der Ansprüche 1 bis 3, **dadurch gekennzeichnet, dass** das Element zur Erfassung eines Haltezeichens auch derart angeordnet ist, dass es ein Synchronisationszeichen (SYNC) erfasst.

5. Empfänger nach Anspruch 4, **dadurch gekennzeichnet, dass** er eine Autosynchronisationsschaltung (ASU) umfasst, die derart angeordnet ist, dass sie ein lokales Zeitsignal (CK) des Empfängers auf ein Referenzzeitsignal setzt, das in einem Synchronisationszeichen vorhanden ist.

6. Empfänger nach Anspruch 5, **dadurch gekennzeichnet, dass** die Autosynchronisationsschaltung von dem Element zur Erfassung eines Haltezeichens (SM1) aktiviert wird.

7. Empfänger nach einem der Ansprüche 1 bis 6, **dadurch gekennzeichnet, dass** das Element zur Erfassung eines Haltezeichens eine Zustandsmaschine (SM1) ist.

8. Empfänger nach einem der Ansprüche 1 bis 7, **dadurch gekennzeichnet, dass** das Element zur Bearbeitung eines Standardzeichens eine Zustandsmaschine (SM2) ist.

9. Empfänger nach einem der Ansprüche 1 bis 8, bei dem die Mittel (MDREG, MDB) zur Auswahl einer ersten oder einer zweiten Betriebsart ein Register (MDREG) umfassen, in dem ein Modebit (MDB) gespeichert ist.

10. Integrierte Schaltung, umfassend einen Empfänger nach einem der Ansprüche 1 bis 9.

11. Mikrokontroller, umfassend einen Empfänger nach einem der Ansprüche 1 bis 9.

12. Verfahren für den Empfang von asynchronen Rastern, die Standardzeichen (CH1-CHN) umfassen und in der Kopfzeile ein Haltezeichen (BRK) mit einer größeren Länge als jene eines Standardzeichens umfassen können, umfassend einen Schritt der Erfassung eines Haltezeichens, gefolgt von einem Schritt der Bearbeitung eines Standardzeichens,

**dadurch gekennzeichnet, dass** die Schritte der Erfassung eines Haltezeichens und der Bearbeitung eines Standardzeichens mit getrennten Mitteln durchgeführt werden, mit Hilfe eines Elements (SM1) zur Erfassung eines Haltezeichens und eines Elements (SM2) zur Bearbeitung eines Standardzeichens, wobei das Bearbeitungselement von dem Erfassungselement aktiviert wird, wenn dieses aktiv ist.

13. Verfahren nach Anspruch 12, bei dem das Element zur Erfassung eines Haltezeichens derart angeordnet ist, dass es ein Haltezeichen (BRK) erfasst, das sich aus Bits zusammensetzt, die alle denselben Wert haben.

14. Verfahren nach einem der Ansprüche 12 und 13, **dadurch gekennzeichnet, dass** der Schritt der Erfassung eines Haltezeichens mittels einer Zustandsmaschine (SM1) eingesetzt wird.

15. Verfahren nach einem der Ansprüche 12 bis 14, **dadurch gekennzeichnet, dass** der Schritt der Bearbeitung eines Standardzeichens mittels einer Zustandsmaschine (SM2) eingesetzt wird.

16. Verfahren nach einem der Ansprüche 12 bis 15, **dadurch gekennzeichnet, dass** es einen Schritt der Identifizierung eines Synchronisationszeichens (SYNC) umfasst, das nach dem Haltezeichen empfangen wurde.

17. Verfahren Anspruch 16, **dadurch gekennzeichnet, dass** es einen Schritt der Synchronisation eines lokalen Zeitsignals (CK) aus einem Referenzzeitsignal, das in dem Synchronisationssignal (SYNC) vorhanden ist, umfasst, wobei der Schritt der Wiedergewinnung auf den Schritt der Identifizierung folgt.

18. Verfahren nach einem der Ansprüche 12 bis 17, umfassend einen Schritt der Auswahl (MDREG, MDB) einer ersten Betriebsart, bei der das Element zur Erfassung eines Haltezeichens deaktiviert ist, oder einer zweiten Betriebsart, bei der das Element der Erfassung eines Haltezeichens aktiv ist und das Element zur Bearbeitung eines Standardzeichens kontrolliert.

**Claims**

1. An asynchronous frame receiver (UART1) provided for receiving frames comprising standard characters (CH1-CHN) and likely to comprise, in a header, a break character (BRK) of a length greater than that of a standard character, **characterised in that** it comprises a break character detection unit (SM1) and a standard character processing unit (SM2), the standard character processing unit (SM2) being distinct from the break character detection unit and activated by the break character detection unit when the latter is active.

2. Receiver according to claim 1, **characterised in that** it comprises means for selecting (MDREG, MDB) a first operating mode in which the break character detection unit is deactivated, or a second operating mode in which the break character detection unit is active and controls the standard character processing unit.

3. Receiver according to one of claims 1 and 2, **characterised in that** the break character detection unit is arranged for detecting a break character (BRK) consisting of bits all having the same value.

4. Receiver according to one of claims 1 to 3, **characterised in that** the break character detection unit is also arranged for detecting a synchronisation character (SYNC).

5. Receiver according to claim 4, **characterised in that** it comprises a self-synchronisation circuit (ASU) arranged for synchronising a local clock signal (CK) of the receiver to a reference clock signal present in a synchronisation character.

6. Receiver according to claim 5, **characterised in that** the self-synchronisation circuit is activated by the break character detection unit (SM1).

7. Receiver according to one of claims 1 to 6, **characterised in that** the break character detection unit is a state machine (SM1).

8. Receiver according to one of claims 1 to 7, **characterised in that** the standard character processing unit is a state machine (SM2).

9. Receiver according to one of claims 1 to 8, wherein the means for selecting (MDREG, MDB) a first or a second operating mode comprise a register (MDREG) in which a mode bit (MDB) is stored.

10. An integrated circuit, comprising a receiver according to one of claims 1 to 9.

11. A microcontroller, comprising a receiver according to one of claims 1 to 9.

12. A method for receiving asynchronous frames comprising standard characters (CH1-CHN) and likely to comprise, in a header, a break character (BRK) of a length greater than that of a standard character, comprising a step of break character detection followed by a step of standard character processing, **characterised in that** the steps of break character detection and of standard character processing are performed with distinct means, by means of a break character detection unit (SM1) and a standard character processing unit (SM2), the processing unit being activated by the detection unit when the latter is active.

13. Method according to claim 12, wherein the break character detection unit is arranged for detecting a break character (BRK) consisting of bits all having the same value.

14. Method according to one of claims 12 and 13, **characterised in that** the break character detection step is performed by means of a state machine (SM1).

15. Method according to one of claims 12 to 14, **characterised in that** the standard character processing step is performed by means of a state machine (SM2).

16. Method according to one of claims 12 to 15, **characterised in that** it comprises a step of identifying a synchronisation character (SYNC) received after the break character.

17. Method according to claim 16, **characterised in that** it comprises a step of synchronising a local clock signal (CK) using a reference clock signal present in the synchronisation character (SYNC), the recovery step following the identification step.

18. Method according to one of claims 12 to 17, comprising a step of selecting (MDREG, MDB) a first operating mode in which the break character detection unit is deactivated, or a second operating mode in which the break character detection unit is active and controls the standard character processing unit.

BS

BRK SYNC CH1 CH2 CHN

**Fig. 1**

SYNC

D=8T

2T 2T 2T 2T

STB B$_0$ B$_1$ B$_2$ B$_3$ B$_4$ B$_5$ B$_6$ B$_7$ SPB

[55]h

**Fig. 4**

RDT **Fig. 6A**

CKS **Fig. 6B**

SCOUNT .. ... ... 0 1 2 3 4 5 6 7 8 9 10 11 12 13 14 15 0 1 2 3 4 **Fig. 6C**

SET6

SRDT **Fig. 6D**

FEDET **Fig. 6E**

10

**Fig. 2**

RESET

SM1

$B_S=0$

FIELD OTHER

$B_S=1$

$E_S$ — $B_0=1$

$B_0=0$

$E_0$ — $B_1=1$

$B_1=0$

$E_1$ — $B_2=2$

$E_i$

$E_9$ — $B_{10}=1$

$B_{10}=0$

$E_{10}$

FIELD SYNCHRO

FIELD IDENT

**Fig. 3**

SM2

RESET

$STB=1$

IDLE

$STB=0$

START BIT

BIT0

BIT1

BITi

ERROR — $SPB=0$ — BIT7

$SPB=1$

STOP BIT

Fig. 5

EP 1 436 714 B1

**Fig. 7**